# EUROPÄISCHE PATENTSCHRIFT

(11) **EP 2 018 989 B1**
(45) Veröffentlichungstag und Bekanntmachung des Hinweises auf die Patenterteilung: **21.04.2010**
(21) Anmeldenummer: 08009397.4
(22) Anmeldetag: 21.05.2008
(51) Int. Cl.: B60K 1/04, B66F 9/075

(54) **Hubwagen mit einem Batteriefach und einer Batterie**
Jack lift with a battery compartment and a battery
Chariot élévateur doté d'un compartiment de batterie et d'une batterie

(30) Priorität: 25.07.2007 DE 102007034743
(43) Veröffentlichungstag der Anmeldung: 28.01.2009
(73) Patentinhaber: Linde Material Handling GmbH, 63743 Aschaffenburg (DE)
(72) Erfinder: Frangeul, Xavier, 86530 Cenon sur Vienne (DE)
(74) Vertreter: Geirhos, Johann

(56) Entgegenhaltungen:
- EP-A- 0 989 618
- DE-A1- 2 308 975
- GB-A- 1 511 186

## Beschreibung

Die Erfindung betrifft einen Hubwagen, insbesondere Niederhubwagen, mit einem Batteriefach zur Aufnahme der Batterie, einer in dem Batteriefach angeordneten Batterie und einer Kupplung-Stecker-Vorrichtung zur elektrischen Verbindung der Batterie mit einem elektrischen Antriebssystem des Hubwagens.

Bei gattungsgemäßen Hubwagen ist mittels der Batterie ein aus einem elektrischen Fahrantriebsmotor eines Fahrantriebs und einem elektrischen Hubmotor eines Hubantriebs bestehendes elektrisches Antriebssystem mit elektrischer Energie versorgbar. Die elektrische Verbindung der Batterie mit dem Antriebssystem erfolgt mittels einer Kupplung-Stecker-Verbindung, wobei üblicherweise die Kupplung der Kupplung-Stecker-Verbindung mittels eines Kabels mit der Batterie verbunden ist und der Stecker der Kupplung-Stecker-Verbindung mittels eines Kabels mit dem im Hubwagen angeordneten Antriebssystem in Verbindung steht.

Beim Batteriewechsel gattungsgemäßer Hubwagen muss hierbei vor dem Herausziehen der Batterie aus dem Batteriefach von der Bedienperson die Kupplung-Stecker-Vorrichtung von Hand getrennt werden und nach dem Hineinschieben der Batterie in das Batteriefach die Kupplung-Stecker-Vorrichtung von Hand verbunden werden.

Aus der DE 2 308 975 A ist ein als Gabelstapler ausgebildetes batterie-elektrisch betriebenes Flurförderzeug mit einer elektrischen Steckkontakteinrichtung bekannt. Die Steckkontakteinrichtung ist Bestandteil einer Antriebssteuerung und umfasst eine Steuerungsgrundplatte mit elektrischen Stiftkontakten, die mit federbelasteten Buchsenkontakten kontaktierbar sind: Die Buchsenkontakte sind in einem Buchsengehäuse angeordnet sind, das mit dem Fahrzeugrahmen verschraubt ist. Durch Verschrauben der Steuerungsgrundplatte mit dem Fahrzeugrahmen können die elektrischen Kontakte der Antriebssteuerung zu Wartungs- und Reparaturzwecken der Antriebssteuerung, wobei die Antriebssteuerung von dem Flurförderzeug getrennt wird, kontaktiert bzw. getrennt werden.

Der vorliegende Erfindung liegt die Aufgabe zugrunde, einen Hubwagen der eingangs genannten Gattung zur Verfügung zu stellen, bei dem mit geringem Bauaufwand ein einfacher Batteriewechsel ermöglicht wird.

Diese Aufgabe wird efindungsgemäß dadurch gelöst, dass in das Batteriefach eine Kontakteinrichtung, insbesondere eine Kupplung, der Kupplung-Stecker-Vorrichtung und in die Batterie eine Kontakteinrichtung, insbesondere ein Stecker, der Kupplung-Stecker-Vorrichtung integriert ist, wobei beim Durchführen des Batteriewechsels durch eine Bewegung der Batterie relativ zum Batteriefach die in der Batterie integrierte Kontakteinrichtung mit der in das Batteriefach integrierten Kontakteinrichtung automatisch kontaktierbar ist. Erfindungsgemäß ist in das Batteriefach und in die Batterie jeweils eine Kontakteinrichtung der Kupplung-Stecker-Verbindung integriert und somit fest angeordnet. Beim Batteriewechsel werden sowohl beim Herausziehen der Batterie aus dem Batteriefach als auch beim Hineinschieben der Batterie in das Batteriefach die beiden Kontakteinrichtungen automatisch miteinander kontaktiert und somit die Kupplung-Stecker-Verbindung durch die Bewegung der Batterie relativ zum Batteriefach automatisch getrennt bzw. verbunden. Durch die Integration der beiden Kontakteinrichtungen in das Batteriefach und die Batterie und somit die feste Anordnung der Kontakteinrichtungen an der Batterie und dem Batteriefach wird hierbei mit geringem Bauaufwand ein Batteriewechsel mit einer automatisierten Kontaktierung der Kupplung-Stecker-Vorrichtung erzielt.

Gemäß einer bevorzugten Ausführungsform der Erfindung ist die Kontakteinrichtung an einer Stirnseite des Batteriefachs angeordnet. Beim Einschieben der Batterie in das Batteriefach bzw. beim Herausziehen der Batterie aus dem Batteriefach kann somit die Kupplung-Stecker-Vorrichtung auf einfache Weise automatisch verbunden bzw. getrennt werden. Die Kontakteinrichtung kann hierbei an der Stirnseite des Batteriefachs auf einfache Weise vor Beschädigungen geschützt im Batteriefach angeordnet werden.

Besondere Vorteile ergeben sich, wenn gemäß einer Weiterbildung der Erfindung das Batteriefach mit einer Führungs- und/oder Verriegelungseinrichtung für die Batterie versehen ist. Hierdurch kann beim Batteriewechsel auf einfache Weise eine sichere Führung und Verriegelung der Batterie im Batteriefach erzielt werden und somit die automatische Kontaktierung der im Batteriefach und der Batterie integrierten Kontakteinrichtungen sichergestellt werden.

Zweckmäßigerweise ist die Führungs- und/oder Verriegelungseinrichtung von mindestens einer an dem Batteriefach angeordneten Führungsschiene gebildet, die mit einer Verriegelungseinrichtung der Batterie in Wirkverbindung bringbar ist. Mit derartigen Führungsschienen kann die Batterie beim Batteriewechsel mit geringem Aufwand geführt und nach der automatischen Kontaktierung verriegelt werden

Die Führungsschiene ist gemäß einer bevorzugten Ausgestaltungsform der Erfindung von einer an der Rückwand des Batteriefachs angeordneten schlitzförmigen Ausnehmung gebildet. Derartige schlitzförmige Ausnehmung können an der Rückwand des Batteriefachs auf einfache Weise und mit geringem Herstellaufwand hergestellt werden.

Gegenstand der Erfindung ist weiterhin eine Batterie zur Verwendung in einem Hubwagen entsprechend der obigen Beschreibung, wobei die Batterie an einer Stirnseite mit der Kontakteinrichtung versehen ist. Durch die Anordnung und Integration der Kontakteinrichtung an der Stirnseite der Batterie kann auf einfache Weise die in die Stirnseite des Batteriefachs integrierte Kontakteinrichtung beim Batteriewechsel automatisch kontaktiert werden.

Gemäß einer Weiterbildung der Erfindung ist die Batterie mit mindestens einer Verriegelungseinrichtung versehen, die beim Einschieben der Batterie in das Batteriefach mit der an dem Batteriefach ausgebildeten Führungsschiene in Wirkverbindung bringbar ist. Mit einer derartigen an der Batterie angeordneten Verriegelungseinrichtung kann die Batterie beim Batteriewechsel auf einfache Weise während des Batteriewechsels geführt und verriegelt werden.

Die Verriegelungseinrichtung ist vorteilhafterweise von mindestens einem nutensteinförmigen Führungszapfen gebildet, wodurch auf einfache Weise eine Führung und Verriegelung in den an dem Batteriefach ausgebildeten Führungsschienen erzielbar ist.

Zweckmäßigerweise sind die Führungszapfen an der Rückseite der Batterie angeordnet, wodurch eine Führung und Verriegelung der Batterie mit den an der Rückwand des Batteriefachs angeordneten Führungsschienen auf einfache Weise erzielbar ist.

Gemäß einer Weiterbildung der Erfindung ist die Batterie mit einem Handgriff versehen. Mit einem Handgriff kann die Batterie von einer Bedienperson zum Batteriewechsel in ergonomisch günstiger Weise in das Batteriefach hineingeschoben bzw. aus dem Batteriefach gezogen werden.

Zweckmäßigerweise ist der Handgriff von einer an der Vorderseite der Batterie ausgebildeten Ausnehmung gebildet, wodurch mit geringem Bauaufwand eine einfache Handhabung der Batterie ermöglicht wird.

Gemäß einer Weiterbildung der Erfindung ist die Batterie an der Vorderseite mit einer verstärkten Oberfläche versehen ist. Hierdurch wird auf einfache Weise ermöglicht, die Batterie an dem dem Lastteil zugewandten Bereich des Hubwagens anzuordnen und als Zwischenwand zu der auf dem Lastteil aufgenommen Last zu verwenden. Durch die verstärkte Oberfläche werden hierbei Beschädigungen der Batterie beim direkten Kontakt mit der Last wirksam vermieden.

Weitere Vorteile und Einzelheiten der Erfindung werden anhand der in den schematischen Figuren dargestellten Ausführungsbeispiele näher erläutert. Hierbei zeigt
- Figur 1: einen erfindungsgemäßen Hubwagen in einer perspektivischen Darstellung,
- Figur 2: das Batteriefach des erfindungsgemäßen Hubwagens in einer Ansicht von Vorne,
- Figur 3: das Batteriefach in einer Ansicht von Hinten,
- Figur 4: das Batteriefach mit Batterie beim Batteriewechsel und
- Figur 5: die Batterie in einer vergrößerten Darstellung.

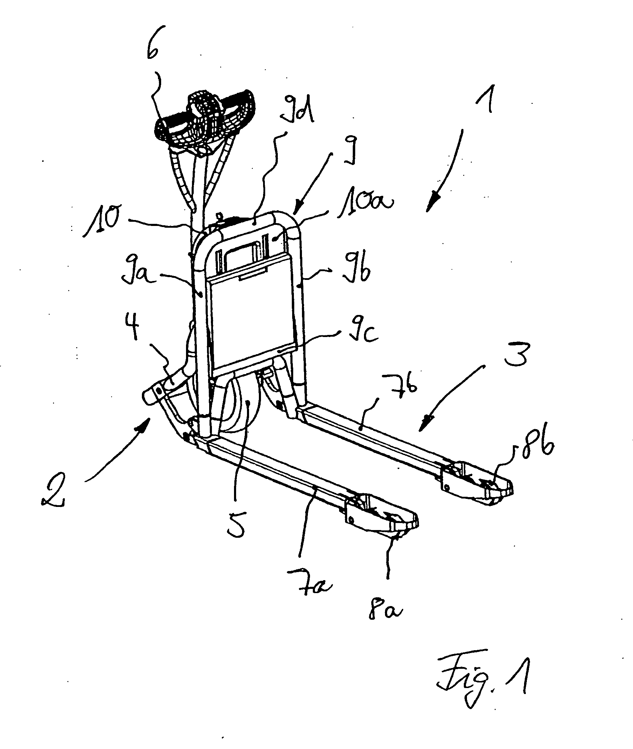

In der Figur 1 ist ein erfindungsgemäßer, als Niederhubwagen ausgebildeter Hubwagen 1 mit einem Antriebsteil 2 und einem auf nicht mehr dargestellte Weise relativ zum Antriebsteil 2 vertikal bewegbaren Lastteil 3 dargestellt. Der Antriebsteil 2 umfasst einen bügelförmigen Rahmenabschnitt 4, an dem eine ein Antriebsrad 5 aufweisende Fahrantriebseinheit lenkbar angeordnet ist. Die Fahrantriebseinheit umfasst hierbei einen nicht mehr dargestellten elektrischen Fahrantriebsmotor zum Antrieb des Antriebsrades 5. Das Lenken des Hubwagens 1 erfolgt mittels einer mit dem Antriebsrad 5 verbundenen Deichsel 6. Das Antriebsrad 5 ist hierbei als luftbereiftes Antriebsrad ausgebildet.

Zum Lastteil 3 gehören zwei Lastarme 7a, 7b, die mittels vertikal anhebbaren und absenkbaren Lastrollen 8a, 8b auf einer Fahrbahn abgestützt sind, wobei mit den Lastarmen 7a, 7b mit denen Lasten, beispielsweise Paletten, Gitterboxen oder Kleinteilebehälter aufgenommen, angehoben und transportiert werden können. An dem dem Antriebsteil 2 zugewandten Bereich des Lastteils 3 ist am Lastteil 3 eine vertikale Gehäuseaufnahme 9 angeordnet, die von vertikal angeordneten seitlichen Bügeln 9a, 9b einem unteren Querbügel 9c und einem oberen Querbügel 9d gebildet ist.

Der bügelförmige Rahmenabschnitt 4 des Antriebsteils 2 und der von den Lastarmen 7a, 7b sowie der Gehäuseaufnahme 8 gebildete Lastteil 3 ist hierbei von einstückigen Hohlprofilen, beispielsweise Rohrprofilen, mit einem geschlossenen Querschnitt gebildet.

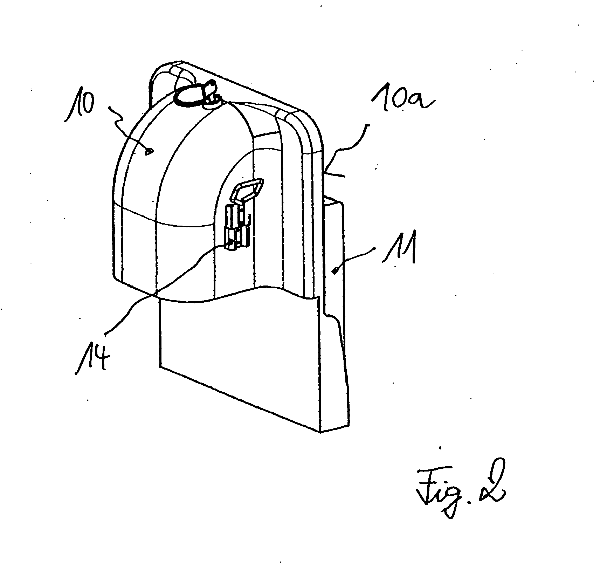

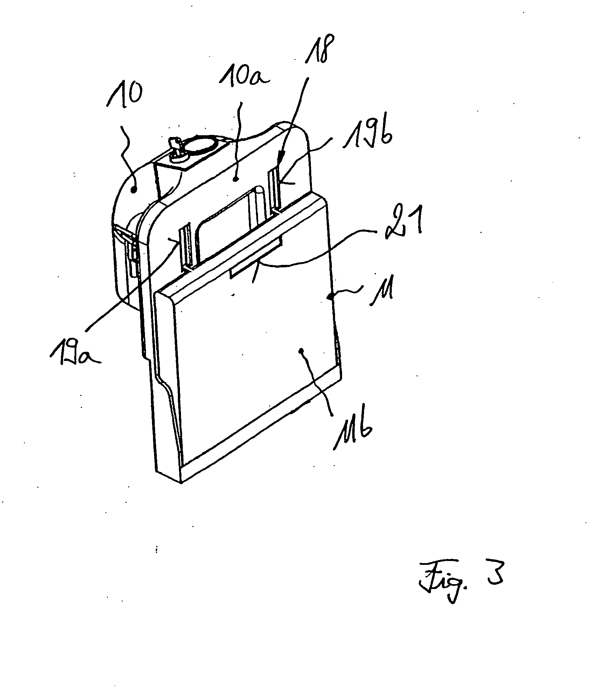

Der Hubwagen 1 ist mit einem elektrischen Antriebssystem versehen, das von einer Batterie 11 mit elektrischer Energie versorgt wird. Die Batterie 11 ist in einem vertikal angeordneten, schubladenförmigen Batteriefach 10a angeordnet, das Teil eines in den Figuren 2 und 3 dargestellten Gehäuses 10 ist.

Das Gehäuse 10 ist hierbei beispielsweise mittels Gummielementen an der Gehäuseaufnahme 9 elastisch befestigt, wobei sich das Batteriefach 10a mit der Batterie innerhalb des von den seitlichen Trägern 9a, 9b und den Querträgern 9c, 9d aufgespannten Raumes der Gehäuseaufnahme 9 befindet. Die Batterie 11 ist somit senkrecht angeordnet und befindet sich - in Längsrichtung des Hubwagens 1 gesehen - innerhalb der Gehäuseaufnahme 9, wodurch die Batterie 11 geschützt von der Gehäuseaufnahme 9, die einen Schutzbügel für die in dem Batteriefach 10b angeordnete Batterie 11 bildet, am Hubwagen 1 angeordnet ist.

In dem Gehäuse 10 befinden sich hierbei weitere Komponenten des elektrischen Antriebssystems des Hubwagens 1, wobei eine elektrische Verbindung zu dem das Antriebsrad 5 antreibenden Fahrantriebsmotor mittels einer am Gehäuse 10 angeordneten Steckerverbindung 14 hergestellt werden kann.

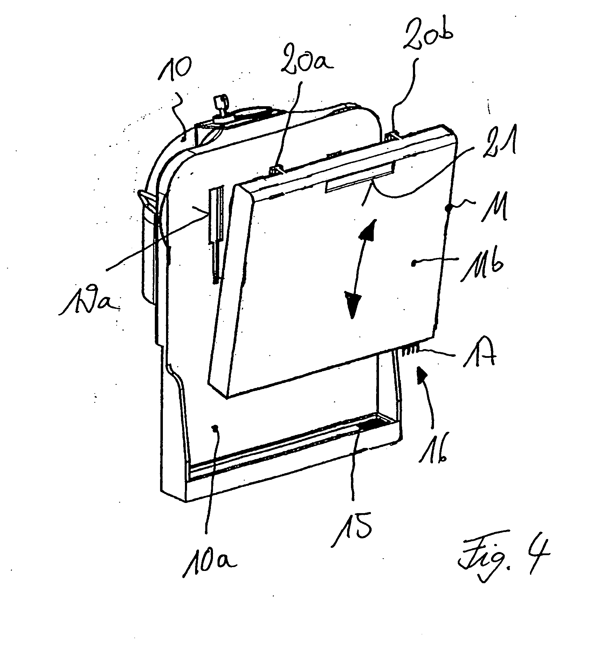

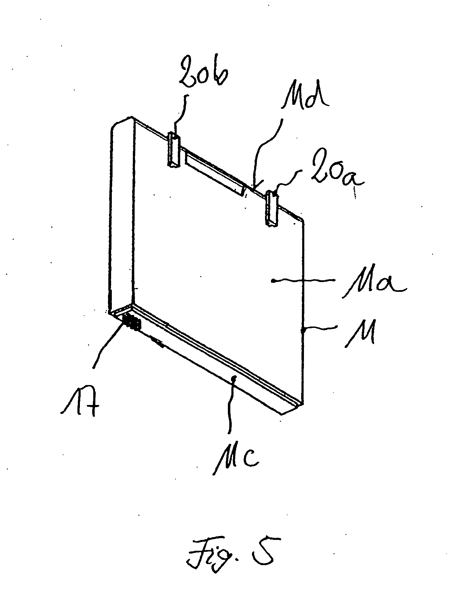

In das Batteriefach 10a des Gehäuses 10 ist erfindungsgemäß - wie in der Figur 4 dargestellt ist - im Bereich einer unteren Stirnseite eine als Kupplung ausgebildete Kontakteinrichtung 15 einer Kupplung-Stecker-Vorrichtung 16 integriert, die mit einer in der Batterie 11 integrierten, als Stecker ausgebildeten Kontakteinrichtung 17 der Kupplung-Stecker-Vorrichtung 16 beim Batteriewechsel automatisch in Wirkverbindung bringbar ist. Die Kontakteinrichtung 17 ist hierbei - wie in Figur 5 dargestellt ist - an der unteren Stirnseite 11c der Batterie 11 angeordnet.

Beim Einschieben der Batterie 11 in das Batteriefach 10a des Gehäuses 10 durch eine im Wesentlichen vertikale Bewegung der Batterie 10 relativ zum Batteriefach 10a wird somit die von den Kontakteinrichtungen 15, 17 gebildete Kupplung-Stecker-Vorrichtung 16 automatisch kontaktiert, wodurch die Batterie 11 automatisch mit dem elektrischen Antriebssystem des Hubwagens 1 verbunden wird. Entsprechend wird die Kupplung-Stecker-Vorrichtung 16 beim Herausziehen der Batterie 11 aus dem Batteriefach 10a durch die im Wesentlichen vertikale Bewegung der Batterie 11 relativ zum Batteriefach 10a automatisch getrennt. Die Kontakteinrichtungen 15, 17 sind hierbei als Einsteckkontakte ausgebildet, wodurch in der verbundenen Stellung eine sichere elektrische Verbindung erzielbar ist.

An dem Batteriefach 10a des Gehäuses 10 ist weiterhin eine Führungs- und/oder Verriegelungseinrichtung 18 für die Batterie 11 vorgesehen. Diese Führungs- und/oder Verriegelungseinrichtung 18 weist an dem Batteriefach 10a angeordnete Führungsschienen 19a, 19b auf, die von in Querrichtung des Hubwagens 1 seitlich beabstandeten, schlitzförmigen Ausnehmungen gebildet sind, die in der vertikalen Rückwand des Batteriefachs 10a angeordnet sind.

An der Rückseite 11a der Batterie 11 sind nutensteinförmige Führungszapfen angeordnet, die Verriegelungseinrichtungen 20a, 20b bilden und mit den von den schlitzförmigen Ausnehmungen gebildeten Führungsschienen 19a, 19b des Batteriefachs 10a beim Einschieben der Batterie 11 in das Batteriefach 10a in Wirkverbindung bringbar sind. Die Batterie 11 kann somit beim Batteriewechsel zur automatischen Kontaktierung der Kupplung-Stecker-Vorrichtung 16 mittels der Führungs- und Verriegelungsvorrichtung 18, die von den im Batteriefach 10a ausgebildeten Führungsschienen 19a, 19b und den an der Batterie 11 angeordneten Verriegelungseinrichtungen 20a, 20b gebildet ist, sicher geführt und nach der Kontaktierung in dem Batteriefach 10a sicher gehalten werden.

Für eine leichte Handhabung der Batterie 11 und einen ergonomisch günstigen Batteriewechsel ist die Batterie 11 mit einem Handgriff 21 versehen, der beispielsweise von einer an der Vorderseite 11b der Batterie 11 im Bereich der oberen Stirnseite 11d angeordneten Ausnehmung gebildet ist.

Um Beschädigungen der Batterie 11 durch die auf den Lastarmen 7a, 7b aufgenommenen Last zu vermeiden, ist darüber hinaus die dem Lastteil 3 zugewandte Vorderseite 11b der Batterie 11 mit einer verstärkten Oberfläche versehen.

## Patentansprüche

1. Hubwagen, insbesondere Niederhubwagen, mit einem Batteriefach zur Aufnahme der Batterie, einer in dem Batteriefach angeordneten Batterie und einer Kupplung-Stecker-Vorrichtung zur elektrischen Verbindung der Batterie mit einem elektrischen Antriebssystem des Hubwagens, **dadurch gekennzeichnet, dass** in das Batteriefach (10a) eine Kontakteinrichtung (15), insbesondere eine Kupplung, der Kupplung-Stecker-Vorrichtung (16) und in die Batterie (11) eine Kontakteinriclitung (17), insbesondere ein Stecker, der Kupplung-Stecker-Vorrichtung (17) integriert ist, wobei beim Durchführen des Batteriewechsels durch eine Bewegung der Batterie (11) relativ zum Batteriefach (10a) die in der Batterie (11) integrierte Kontakteinrichtung (17) mit der in das Batteriefach (10a) integrierten Kontakteinrichtung (15) automatisch kontaktierbar ist.

2. Hubwagen nach Anspruch 1, **dadurch gekennzeichnet, dass** die Kontakteinrichtung (15) an einer Stirnseite des Batteriefachs (10a) angeordnet ist.

3. Hubwagen nach Anspruch 1 oder 2, **dadurch gekennzeichnet, dass** das Batteriefach (10a) mit einer Führungs- und/oder Verriegelungseinrichtung (18) für die Batterie (11) versehen ist.

4. Hubwagen nach Anspruch 3, **dadurch gekennzeichnet, dass** die Führungs- und/oder Verriegelungseinrichtung (18) von mindestens einer an dem Batteriefach angeordneten Führungsschiene (19a; 19b) gebildet ist, die mit einer Verriegelungseinrichtung (20a; 20b) der Batterie (11) in Wirkverbindung bringbar ist.

5. Hubwagen nach Anspruch 4, **dadurch gekennzeichnet, dass** die Führungsschiene (19a; 19b) von einer an der Rückwand des Batteriefachs (10a) angeordneten schlitzförmigen Ausnehmung gebildet ist.

6. Batterie zur Verwendung in einem Hubwagen nach einem der vorangegangenen Ansprüche, **dadurch gekennzeichnet, dass** die Batterie (11) an einer Stirnseite (11 c) mit der Kontakteinrichtung (17) versehen ist.

7. Batterie nach Anspruch 6, **dadurch gekennzeichnet, dass** die Batterie (11) mit mindestens einer Verriegelungseinrichtung (20a; 20b) versehen ist, die beim Einschieben der Batterie (11) in das Batteriefach (10a) mit der an dem Batteriefach (10a) ausgebildeten Führungsschiene (19a; 19b) in Wirkverbindung bringbar ist.

8. Batterie nach Anspruch 7, **dadurch gekennzeichnet, dass** die Verriegelungseinrichtung (20a; 20b) von mindestens einem nutensteinförmigen Führungszapfen gebildet ist.

9. Batterie nach Anspruch 7 oder 8, **dadurch gekennzeichnet, dass** die Verriegelungseinrichtung (20a; 20b) an der Rückseite (11a) der Batterie (11) angeordnet ist.

10. Batterie nach einem der Ansprüche 6 bis 9, **dadurch gekennzeichnet, dass** die Batterie (11) mit einem Handgriff (21) versehen ist.

11. Batterie nach Anspruch 10, **dadurch gekennzeichnet, dass** der Handgriff von einer an der Vorderseite (11b) der Batterie (11) ausgebildeten Ausnehmung gebildet ist.

12. Batterie nach einem der Ansprüche 6 bis 11, **dadurch gekennzeichnet, dass** die Batterie (11) an der Vorderseite (11 b) mit einer verstärkten Oberfläche versehen ist.

## Claims

1. Lift truck, in particular a low-level lift truck, having a battery compartment to accommodate the battery, a battery arranged in the battery compartment and a coupling connector device for the electrical connection of the battery to an electric drive system of the lift truck, **characterized in that** a contact making device (15), in particular a coupling, belonging to the coupling connector device (16) is integrated into the battery compartment (10a), and a contact making device (17), in particular a plug, belonging to the coupling connector device (17) is integrated into the battery (11), it being possible, when the battery change is being carried out, for the contact making device (17) integrated into the battery (11) to make contact automatically with the contact making device (15) integrated into the battery compartment (10a), by means of a movement of the battery (11) relative to the battery compartment (10a).

2. Lift truck according to Claim 1, **characterized in that** the contact making device (15) is arranged on the front side of the battery compartment (10a).

3. Lift truck according to Claim 1 or 2, **characterized in that** the battery compartment (10a) is provided with a guiding and/or locking device (18) for the battery (11).

4. Lift truck according to Claim 3, **characterized in that** the guiding and/or locking device (18) is formed by at least one guide rail (19a; 19b) which is arranged on the battery compartment and which can be brought into an operative connection with a locking device (20a; 20b) belonging to the battery (11).

5. Lift truck according to Claim 4, **characterized in that** the guide rail (19a; 19b) is formed by a slot-like recess arranged on the rear wall of the battery compartment (10a).

6. Battery for use in a lift truck according to one of the preceding claims, **characterized in that** the battery (11) is provided with the contact making device (17) on one end (11c).

7. Battery according to Claim 6, **characterized in that** the battery (11) is provided with at least one locking device (20a; 20b) which, as the battery (11) is inserted into the battery compartment (10a), can be brought into operative connection with the guide rail (19a; 19b) formed on the battery compartment (10a).

8. Battery according to Claim 7, **characterized in that** the locking device (20a; 20b) is formed by at least one guide pin in the form of a T block.

9. Battery according to Claim 7 or 8, **characterized in that** the locking device (20a; 20b) is arranged on the rear side (11a) of the battery (11).

10. Battery according to one of Claims 6 to 9, **characterized in that** the battery (11) is provided with a handgrip (21).

11. Battery according to Claim 10, **characterized in that** the handgrip is formed by a recess formed on the front side (11b) of the battery (11).

12. Battery according to one of Claims 6 to 11, **characterized in that** the battery (11) is provided with a reinforced surface on the front side (11b).

## Revendications

1. Chariot élévateur, notamment chariot élévateur à faible levée, comprenant un compartiment de batterie pour recevoir la batterie, une batterie disposée dans le compartiment de batterie et un dispositif d'accouplement à connecteur pour la connexion électrique de la batterie à un système d'entraînement électrique du chariot élévateur, **caractérisé en ce que** dans le compartiment de batterie (10a) est intégré un dispositif de contact (15), en particulier un accouplement, du dispositif d'accouplement à connecteur (16), et dans la batterie (11) est intégré un dispositif de contact (17), notamment un connecteur, du dispositif d'accouplement à connecteur (17), le dispositif de contact (17) intégré dans la batterie (11) pouvant être mis en contact automatiquement avec le dispositif de contact (15) intégré dans le compartiment de batterie (10a) lors de la mise en oeuvre du changement de batterie, par un déplacement de la batterie (11) par rapport au compartiment de batterie (10a).

2. Chariot élévateur selon la revendication 1,
**caractérisé en ce que** le dispositif de contact (15) est disposé sur un côté frontal du compartiment de batterie (10a).

3. Chariot élévateur selon la revendication 1 ou 2, **caractérisé en ce que** le compartiment de batterie (10a) est pourvu d'un dispositif de guidage et/ou de verrouillage (18) pour la batterie (11).

4. Chariot élévateur selon la revendication 3, **caractérisé en ce que** le dispositif de guidage et/ou de verrouillage (18) est formé par au moins un rail de guidage (19a ; 19b) disposé sur le compartiment de batterie, qui peut être amené en liaison fonctionnelle avec un dispositif de verrouillage (20a ; 20b) de la batterie (11).

5. Chariot élévateur selon la revendication 4, **caractérisé en ce que** le rail de guidage (19a ; 19b) est formé par un évidement en forme de fente disposé sur la paroi arrière du compartiment de batterie (10a).

6. Batterie pour l'utilisation dans un chariot élévateur selon l'une quelconque des revendications précédentes, **caractérisée en ce que** la batterie (11) est munie sur un côté frontal (11c) d'un dispositif de contact (17).

7. Batterie selon la revendication 6, **caractérisée en ce que** la batterie (11) est pourvue d'au moins un dispositif de verrouillage (20a ; 20b), qui peut être amené en liaison fonctionnelle avec le rail de guidage (19a ; 19b) réalisé sur le compartiment de batterie (10a) lors de l'insertion de la batterie (11) dans le compartiment de batterie (10a).

8. Batterie selon la revendication 7, **caractérisée en ce que** le dispositif de verrouillage (20a ; 20b) est formé par au moins un tourillon de guidage en forme de coulisseau.

9. Batterie selon la revendication 7 ou 8, **caractérisée en ce que** le dispositif de verrouillage (20a ; 20b) est disposé du côté arrière (11a) de la batterie (11).

10. Batterie selon l'une quelconque des revendications 6 à 9, **caractérisée en ce que** la batterie (11) est pourvue d'une poignée (21).

11. Batterie selon la revendication 10, **caractérisée en ce que** la poignée est formée par un évidement réalisé sur le côté avant (11b) de la batterie (11).

12. Batterie selon l'une quelconque des revendications 6 à 11, **caractérisée en ce que** la batterie (11) est pourvue sur le côté avant (11b) d'une surface renforcée.
